# EUROPÄISCHE PATENTSCHRIFT

(11) **EP 1 890 914 B1**
(45) Veröffentlichungstag und Bekanntmachung des Hinweises auf die Patenterteilung: **20.07.2011**
(21) Anmeldenummer: 06755188.7
(22) Anmeldetag: 15.05.2006
(51) Int. Cl.: B60R 13/02, B29C 63/22, B29C 43/00, B29C 51/16, B29C 49/00

(54) **VERFAHREN ZUM HERSTELLEN VON INNENAUSSTATTUNGSKOMPONENTEN MIT JEWEILS DEFINIERTEN OBERFLÄCHEN UND/ODER FARBPROFIL**
METHOD FOR THE PRODUCTION OF INTERIOR FITTING COMPONENTS COMPRISING DEFINED SURFACES AND/OR A DEFINED COLOR PROFILE
PROCEDE POUR REALISER DES ELEMENTS D'AMENAGEMENT INTERIEUR PRESENTANT UN PROFIL DE SURFACE ET/OU DE COULEUR DEFINI RESPECTIVEMENT

(30) Priorität: 20.05.2005 DE 102005023945
(43) Veröffentlichungstag der Anmeldung: 27.02.2008
(60) Teilanmeldung: 10189686.8
(73) Patentinhaber: Polytec Automotive GmbH & Co. KG, 82538 Geretsried (DE)
(72) Erfinder: GUTT, Stephan, 81679 München (DE); KLEINT, Oliver, 82538 Geretsried (DE); UNGER, Roland, 82547 Achmühle (DE); DITTRICH, Alfred, 82515 Wolfratshausen (DE); RIESINGER, Stefan, 81476 München (DE)
(74) Vertreter: von Kreisler Selting Werner
(86) Internationale Anmeldenummer: PCT/EP2006/062311
(87) Internationale Veröffentlichungsnummer: WO 2006/122919

(56) Entgegenhaltungen:
- EP-A- 0 759 352
- WO-A-2005/009721
- DE-A1- 10 140 873
- DE-C1- 4 401 903
- US-A1- 2001 000 584
- US-B1- 6 318 783

## Beschreibung

Gegenstand der Erfindung ist ein Verfahren zur Herstellung von Innenausstattungskomponenten von Kraftfahrzeugen mit einem definierten Oberflächenprofil.

DE 44 47 645 C2 betrifft ein Verfahren zum Herstellen eines Formteiles, insbesondere einer Innenverkleidung oder dergleichen für Kraftfahrzeuge, hergestellt aus einer mit einem thermoplastischen Harz vorimprägnierten Vliesmatte, bei dem die Vliesmatte über die Erweichungstemperatur des thermoplastischen Harzes hinaus in einer Kontaktheizpresse flächig erwärmt und vorverdichtet und diese Vliesmatte unter hohem Druck und einer Temperatur von 100 bis 130 °C in einer Heißdruckform verpresst wird und das verpresste Formteil in mindestens einer Kühlstufe gekühlt wird, wobei in dieser mindestens einer Kühlstüfe zumindest ein Kontaktdruck zwischen der Kühlform und dem geformten Formteil aufrecht erhalten wird, wobei auf das verpresste Formteil eine Folie oder sonstiges Dekormaterial aufkaschiert wird, indem die Folie oder sonstiges Dekormaterial sowie die zu kaschierende Oberfläche des Formteils durch Kontaktwärme erhitzt und unter geringem Druck aneinandergelegt werden, woraufhin das mit der Kaschierfolie oder sonstigen Dekormaterial versehene verpresste Formteil abgekühlt wird.

DE 44 00 388 C2 betrifft ein Verfahren zum Herstellen eines Formteils, insbesondere eines Verkleidungsteils für ein Kraftfahrzeug, aus mindestens einer Trägerschicht und einer Kaschierschicht, bei dem die flachen Schichten in paralleler Erstreckung aufeinander ausgerichtet und die Ränder und im Abstand voneinander gehalten werden, während der Rand abgetrennt wird, und die Schichten und unter gegenseitigen Verbindungen zwischen zwei Pressformflächen zusammengepresst werden, worauf der gegenüber dem bearbeitenden Rand der Trägerschicht angelegt und an dieser befestigt wird, dadurch gekennzeichnet, dass unmittelbar nach dem Abtrennen des Randes der Trägerschicht und dem Zusammenpressen der beiden Schichten der vorstehenden Rand der Kaschierschicht um den bearbeitenden Rand umgelegt und an die Rückseite der Trägerschicht angedrückt wird, während das Formteil mit seiner Vorderseite noch an der zugeordneten Pressformfläche anliegt.

DE 196 07 781 A1 betrifft Ausstattungsteile für Automobile, die meist Schichtstoffe sind mit einer Basis und einem textilen Dekor. Aus technologischen Gründen besteht dieses bisher aus Polyesterfasern. Zur Reduzierung der Anzahl der Polymeren in einem besonderen Gesamtaufbau werden demgegenüber Polypropylenfasern eingesetzt. Ermöglicht wird dies durch ein neues Kaschierverfahren und spezieller Wärmeführung im Prozess und Kaschiervorlage des Dekors.

DE 199 59 654 A1 beschreibt ein Verfahren zur Herstellung von Innenausstattungskomponenten von Kraftfahrzeugen mit einem definierten Oberflächenprofil, wobei man in einem ersten Schritt einen, die sichtbare Oberfläche bildenden Werkstoff (1) in einer Werkzeugkavität positioniert und durch Einwirkung von Druck und/oder Temperatur verformt und die gewünschte Oberflächenprägung erzeugt, in einem weiteren Schritt einen Trägerwerkstoff (2) auf der Basis von naturfaserverstärkten Polymerwerkstoffen in die Werkzeugkavität verformt, wobei Randbereiche des Werkstoffs (1) nicht mit dem Trägerwerkstoff (2) bedeckt sind und anschließend nach Umbugen der Randbereiche die Innenausstattungskomponente aus der Werkzeugkavität entformt.

In DE 43 05 847 A1 wird eine Innenverkleidung für einen Baukörper und ein Verfahren zur Herstellung desselben beschrieben. Die Verkleidung weist eine Verkleidungsgrundplatte einschließlich eines Grundmaterials und ein erstes Außenschichtmaterial auf, welches auf das Grundmaterial aufkaschiert beziehungsweise laminatartig mit diesem verbunden ist. Die Verkleidungsgrundplatte ist mit einer Mehrzahl von angrenzenden Flächenbereichen mittels wenigstens einer Ausnehmung unterteilt. Wenigstens einer der Flächenbereiche dient als ein Einbauteil. Wenigstens ein Zierteil ist haftend mit der Verkleidungsgrundplatte verbunden und umfasst wenigstens eine starre Grundplatte, welche in der Gestalt entsprechend des Einbauteils ausgebildet ist, und wenigstens ein zweites Außenschichtmaterial, welches die Grundplatte bedeckt. Das Zierteil ist an seinem Umfangsteil mit einem Flansch versehen, welcher eng sitzend in der Ausnehmung der Verkleidungsgrundplatte angeordnet ist. Der Flansch umfasst die starre Grundplatte. Die vorstehend genannte Verkleidung wird mittels eines Verfahrens hergestellt, welches die folgenden Schritte aufweist:
(1) Auflegen eines Grundmaterials, auf ein erstes Formteil eines Presswerkzeugs, wobei das Grundmaterial in eine Mehrzahl von angrenzenden Flächenbereichen mit Hilfe wenigstens einer Ausnehmung unterteilt ist, und wobei wenigstens einer der Flächenbereiche als ein Einbauteil dient; (2) Auflegen eines Zierteils auf das zweite Formteil des Presswerkzeugs, wobei das zweite Formteil dem Formteil zugewandt ist.

DE 103 33 161 A1 beschreibt Innenausstattungskomponenten von Kraftfahrzeugen mit einem definierten Oberflächenprofil.

WO 90/03256 betrifft eine Vorrichtung und ein Verfahren zum Herstellen fester Produkte mit definierter Oberfläche aus einem faserverstärkten Bauteilträger, die in einem One-Step-Verfahren mit Zykluszeiten von 40 bis 60 s verpresst werden.

WO 01/41999 A1 betrifft ein Verfahren zur Herstellung von Innenausstattungs-Komponenten von Kraftfahrzeugen mit einem definierten Oberflächenprofil, wobei man in einem ersten Schritt einen, den die sichtbare Oberfläche bildenden Werkstoff in einer Werkzeugkavität positioniert und durch Einwirkung von Druck und/oder Temperatur verformt und gleichzeitig die gewünschte Oberflächenprägung erzeugt, in einem weiteren Schritt einen Trägerwerkstoff auf der Basis von naturfaserverstärkten Polymerwerkstoffen in die Werkzeugkavität einbringt und anschließend verformt, wobei Randbereiche des Werkstoffs nicht mit dem Trägerwerkstoff bedeckt sind und anschließend nach Umbugen der Randbereiche des Werkstoffs die Innenausstattungskomponenten aus der Werkzeugkavität entformt. Sämtlichen Verfahren des Standes der Technik ist gemeinsam, dass sowohl der Bauträger als auch die Dekorschicht auf eine (hohe) Kaschiertemperatur gebracht werden, um die beiden Teile miteinander zu verbinden. Der Stand der Technik erlaubt auch keinen Einsatz einer Mehrzahl von verschiedenen Bereichen der Dekorschichten mit jeweils definierten Oberflächen- und/oder Farbprofil, die auf einen einteiligen Träger-Werkstoff aufgebracht werden.

In der WO 2005/009721 A1 wird ein Verfahren zur Herstellung von Innenausstattungskomponenten von Kraftfahrzeugen mit einem definierten Oberflächenprofil beschrieben. Das Verfahren wird dadurch realisiert, dass man in einem ersten Schritt den Bauteilträger auf der Basis von naturfaserverstärkten Polymerwerkstoffen herstellt und dessen Oberflächentemperatur auf der mit der Dekorschicht zu versehenen Oberfläche auf die gewünschte Kaschiertemperatur im Bereich von 150 bis 180°C einstellt,

in einem zweiten Schritt die Sichtseite der Dekorschicht auf die gewünschte Narbtemperatur im Bereich von 200 bis 220°C und die Kaschierseite der Dekorschicht auf die gewünschte Kaschiertemperatur bringt und
anschließend den Bauteilträger und die Dekorschicht in einem Werkzeug verpresst, dessen Oberwerkzeug eine Struktur des definierten Oberflächenprofils aufweist.

Insbesondere japanische Autohersteller nutzen die Möglichkeit Narben auf Dekor-Materialien aufzuprägen, meist für Instrumententafeln aber auch für Türverkleidungen. Diese Bauteile zeigen allerdings durchwegs keine hochwertigen Qualitäten der Narbungen und erfüllen in dieser Hinsicht nicht die Anforderungen von Herstellern hochwertiger Fahrzeuge.

Um mit dem sogenannten Inmold-Graining-Verfahren und entsprechenden Innenausstattungskomponenten im Premiumsegment von Kraftfahrzeugen erfolgreich zu sein, müssen das Verfahren und die so erhältlichen Innenausstattungskomponenten so konzipiert sein, dass auch feinste Narbstrukturen im Präge-Werkzeug von der Folie aufgenommen werden und somit eine ideale Narbabbildung und dadurch eine optimale Oberfläche am Bauteil entsteht.

Mit dem in der WO 2005/009721 veröffentlichten Verfahren ist man mittlerweile in der Lage, auch geometrisch komplexe und sehr fein strukturierte Narben (extremstes Beispiel: Nachbildungen von Leder-Echtnarbungen) abzubilden und dabei Radien von bis 2,5 mm zu erzeugen, während mit klassischem Kaschierverfahren lediglich Radien von etwa 5 bis 6 mm möglich sind.

Die Automobilhersteller von Premiumfahrzeugen sind daher sehr an den Inmold-Graining-Verfahren und entsprechenden Innenausstattungskomponenten interessiert. Aufgrund der guten Narb-Abbildung und vor allem der engen (bislang typisch für PUR-Formhautprozesse) Radien, tritt die Technologie derzeit in direkte Konkurrenz mit der PUR-Formhaut, die anschließend mit PUR hinterschäumt wird.

Derzeit hat die PUR-Technologie jedoch einen wesentlichen Vorteil:

Da die Formhaut prozessbedingt zweifarbig hergestellt werden kann, wobei Farbbereiche über einen sehr engen Nutgraben getrennt und zweifarbig im Inmold-Coating-Verfahren lackiert oder mit zweifarbig eingefärbten PUR-Systemen gesprüht werden können einteilige Oberflächen mit zwei- oder mehr Farben erzeugt werden, die anschließend mit einem Trägerteil verbunden werden.

Im oben genannten Inmold-Graining-Verfahren des Standes der Technik lassen sich jedoch nur zwei Bauteile separat herstellen und anschließend in einem geeigneten Fügeprozess beispielsweise durch Schweißen oder Kleben verbinden. Diese Fügeprozesse sind jedoch sehr kostenintensiv und es entstehen Materialdopplungen im Bereich der Fügeflächen (und dadurch Mehrgewicht). EP 0 759 352 zeigt ein Verfahren wobei mehrere Bauteile in einen geeigneten Fügeprozess Verbunden werden. Hier müssen aber Spaltverläufe und Übergänge zum Türinnen-Blech aufwendig abgestimmt werden.

Dementsprechend bestand eine Aufgabe der vorliezgenden Erfindung in der Bereitstellung eines Verfahrens zur Herstellung von entsprechenden Innenausstattungskomponenten von Kraftfahrzeugen, insbesondere mehrfarbigen Bauteilen.

Die vorgenannte Aufgabe der vorliegenden Erfindung wird gelöst in einer ersten Ausführungsform durch ein Verfahren zur Herstellung von Innenausstattungskomponenten von Kraftfahrzeugen nach Anspruch 1.

Die Vorteile des erfindungsgemäßen Verfahrens bestehen insbesondere darin, dass mehrfarbige Bauteile, die durch einen einteiligen Träger gekennzeichnet sind, herstellbar sind.

Mit Hilfe der vorliegenden Erfindung ist beispielsweise ein einteiliger Türverkleidungsträger herstellbar, der unterschiedliche Folienfarben aufweist, die im Inmold-Graining-Verfahren genarbt werden. Beispielsweise kann bei Verwendung von unterschiedlichen Folien-Laminaten die Schaumdicke für Brüstung und Unterteil variiert werden, so dass im Brüstungsbereich mehr Schaumdicke und damit bessere haptische Eigenschaften eingesetzt werden können, während im Unterteil Einsparungen durch reduzierte Schaumdicke vorgenommen werden können. Für Brüstungs- und Unterteil können zusätzlich verfahrenstechnisch problemlos unterschiedliche Narbungen eingesetzt werden, die dem Wunsch des Designers entsprechen.

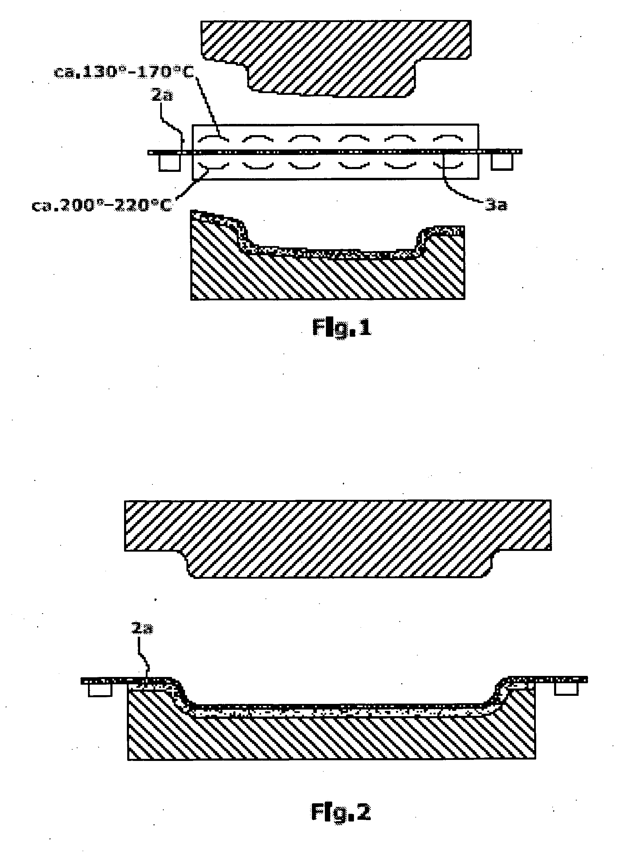

In der Fig. 1 wird die Herstellung der Dekorschicht 2a dargestellt. Zunächst wird die Dekorschicht 2a, die auf der Unterseite gegebenenfalls eine Schaumstoffschicht enthalten kann an der Oberseite auf eine Temperatur im Bereich von 200 bis 220 °C, an der Unterseite auf eine Temperatur im Bereich von 130 bis 170 °C aufgeheizt. In dem Formwerkzeug aus Oberwerkzeug (Stempel) und Unterwerkzeug (Narbschale) wird durch Pressen und/oder Tiefziehen die entsprechende Formteilgeometrie der Dekorschicht 2a hergestellt, wie in Fig. 2 dargestellt. Analog wird dies für die Dekorschicht 2b durchgeführt. In dem Formwerkzeug aus Oberwerkzeug (Stempel) und Unterwerkzeug (genarbt) wird durch Pressen und/oder Tiefziehen die entsprechende Formteilgeometrie, sowie gleichzeitig die Oberflächen-Narbungen der Dekorschicht 2a hergestellt, wie in Fig 2 dargestellt. Analog wird dies für die Dekorschicht 2b durchgeführt. Das genarbte Unterwerkzeug ist dabei vorzugsweise mit (Laser) Bohrungen versehen, damit die Luft aus dem Spalt zwischen den Dekorschichten 2a, 2b und der Werkzeugwand entweichen kann. Hier könnte anstelle des Folienstempels auch ein Vakuumverfahren eingesetzt werden, jedoch bilden sich erfahrungsgemäß feine Narben im Stempeldruck-Verfahren deutlich besser ab.

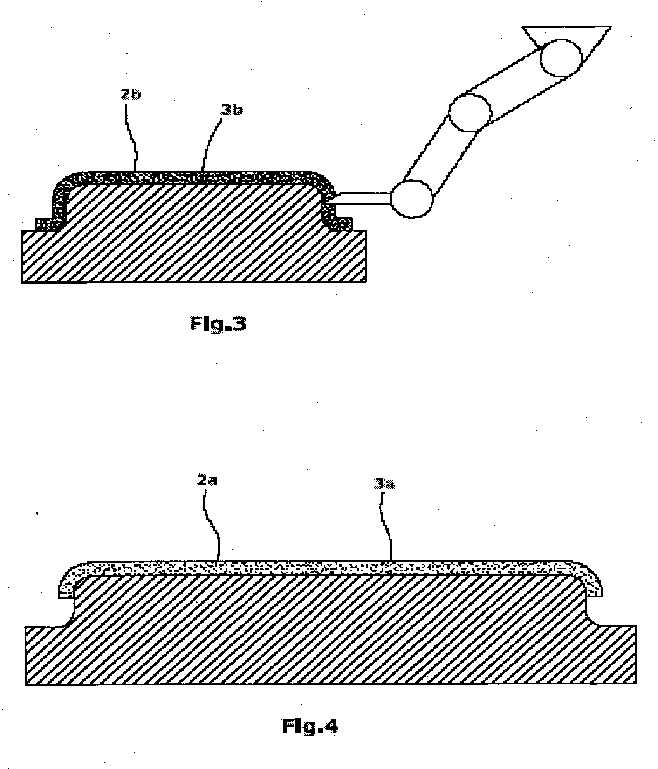

In der Fig. 3 ist dargestellt, wie die erzeugten Narbfolien an den Kanten beschnitten werden. Dies kann beispielsweise per Roboter auf entsprechend Schneidaufnahmen durchgeführt werden, es ist jedoch auch ohne weiteres möglich, dass die Kanten bereits im ersten Verfahrensschritt über entsprechende Werkzeugkanten beschnitten werden.

In der Fig. 4 wird die analog der Fig. 3 hergestellte Dekorschicht 2a auf einem Werkzeug unterteil dargestellt.

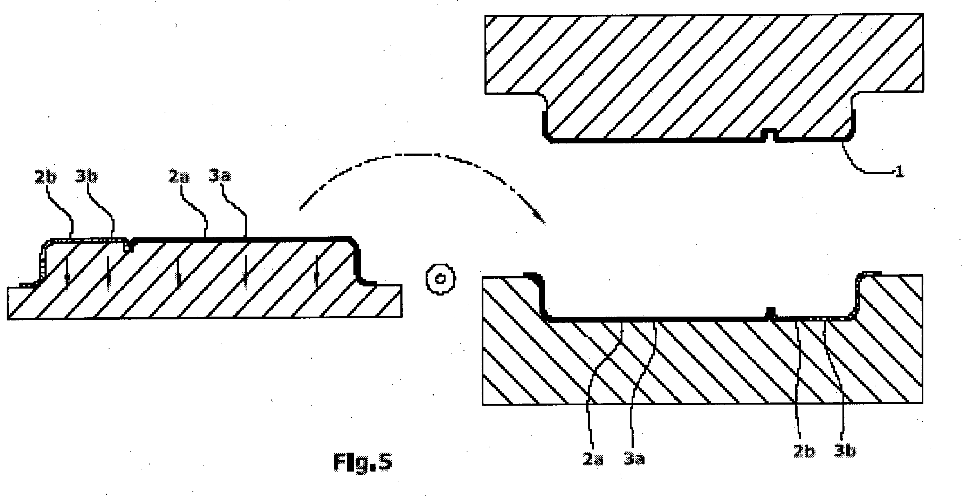

In der Fig. 5 ist dargestellt, wie die beiden Dekorschichten 2a, 2b zueinander ausgerichtet positioniert und durch Unterdruck auf einer Positiv-Vakuum-Form fixiert werden. Die Nut, in der die Farbtrennung verläuft, wird entsprechend der Bauteilgeometrie ausgerichtet und ebenfalls im Vakuum fixiert. Anschließend wird die Positiv-Aufnahme mit den Folien um 180 °C ins eigentliche Kaschierwerkzeug (negativ) eingeschwenkt und übergeben. Wird nun der Unterdruck an der Positiv-Aufnahme ausgeschaltet und beispielsweise Vakuum am Kaschier-Unterwerkzeug eingeschaltet, so werden die Dekorschichten 2a, 2b hier fixiert. Nunmehr wird der Bauteilträger 1 mit den Dekorschichten 2a, 2b in an sich bekannter Weise kaschiert werden. Da vor der Kaschierung die Rückseite der Naht zwischen den Dekorschichten 2a, 2b frei liegt, ist es möglich, die Rückseite dieser Nut in an sich bekannter Weise zu verstärken, beispielsweise durch Verklammern, Verschweißen oder durch Aufstecken eines zusätzlichen Verstärkungs-Teils.

Im Formpress-Werkzeug können deutliche Radienüberhöhungen vorgesehen werden, dies ermöglicht die Darstellung sehr enger Radien im Bereich ab 0,5 mm, insbesondere 2 bis 3 mm. Hervorzuheben ist auch, dass aufgrund der geringen Druckbelastung der später zu kaschierenden Dekorschichten 2a, 2b die Schaumschädigung wesentlich geringer ist und dadurch Schaumbruch und Faltenproblematik ausgeschlossen werden kann.

Gleichzeitig ist auch eine Narbung an diesem scharfkantigen Umbugradius und der späteren Nahtstelle der verschiedenen Dekorschichten 2a, 2b möglich. Mit Hilfe der vorliegenden Erfindung ist darüber hinaus bei der Darstellung einer Galvano/Laser-Narbe, beispielsweise ausgehend von einem Belederungsmodell, die Realisierung eines Zweiglanzes möglich.

Hergestellt werden können Innenausstattungskomponenten von Kraftfahrzeugen aus einem Bauteilträger 1 und wenigstens zwei flächig damit verbundenen Dekorschichten 2a, 2b mit jeweils definiertem Oberflächen- und/oder Farbprofil der Dekorschichten 2a, 2b.

Hergestellt werden können Innenausstattungskomponenten von Kraftfahrzeugen dadurch gekennzeichnet, dass der Bauteilträger 1 einen Türverkleidungsträger, insbesondere auf der Basis von naturfaserverstärkten Polymerwerkstoffen, beispielsweise ein Naturfaser-, beispielsweise ein Flachs-Polypropylen-Material, Naturfaser-, beispielsweise ein (Flachs)-PUR oder ein Naturfaser-, beispielsweise (Flachs)-Epoxidharz-Material , sowie auch ein im Spritzguss-Verfahren hergestellter Träger aus PP, ABS, oder Polyamid umfasst. Diese Materialien sind im Automobilbau weit verbreitet und daher dem Fachmann bestens bekannt.

In einer weiteren bevorzugten Ausführungsform werden als Dekorschichten 2a, 2b Folien, insbesondere Schaumstoff-kaschierte Kunststofffolien eingesetzt. Auch dieses Material der Dekorschichten 2a, 2b ist wie das Material des Bauteilträgers 1 dem Fachmann auf dem Gebiet der Herstellung von Innenausstattungskomponenten für Kraftfahrzeuge bestens bekannt.

Besonders bevorzugt ist eine Kunststofffolie, die ausgewählt ist aus thermoplastischem Polyolefin, ASA, Polyvinylchlorid oder thermoplastischem Polyurethan. Diese Kunststofffolie enthält vorzugsweise auf der Kaschierseite eine Schaumstofffolie, beispielsweise aus Polyethylen/Polypropylen.

Die Kaschiertemperatur des Bauteilträgers 1 und/oder der den Sichtseiten 3a, 3b gegenüberliegenden Seite der Dekorschichten 2a, 2b wird auf einen Wert im Bereich von 150 bis 180 °C eingestellt. Wird die Kaschiertemperatur zu hoch gewählt, so ist zu befürchten, dass die Schaumstoffstruktur der Rückseite der Dekorschichten 2a, 2b beeinträchtigt wird. Wird hingegen die Kaschiertemperatur zu niedrig gewählt, so ist eine ausreichende Verbindung des Bauteilträgers 1 mit den Dekorschichten 2a, 2b nicht zu erwarten. Alternativ kann eine Haftung zwischen den Dekorschichten und dem Bauteilträger auch dadurch gewährleistet werden, daß der Bauteilträger mit herkömmlichen Klebstoffen beschichtet wird (Dispersions-, Lösungsmittel-, Hotmelt-Klebstoffen oder Klebefolien) und anschließend mit den Dekorschichten verbunden wird.

Weiter können in einer bevorzugten Ausführungsform Dekorschichten 2a, 2b mit einer Gesamtfläche eingesetz werden, die die in den Fig. nicht dargestellte Trägerkante des Bauteilträgers 1 überragen und einem weiteren Verfahrensschritt um die Trägerkante gefaltet werden. Alternativ hierzu ist es auch möglich, die Dekorschichten 2a, 2b während des Kaschiervorgangs um die Trägerkante zu falten.

Besonders bevorzugt im Sinne der vorliegenden Erfindung werden die jeweiligen Dekorschichten 2a, 2b in einer Positiv-Vakuumform zu einander ausgerichtet.

Im vierten Schritt des erfindungsgemäßen Verfahrens ist es besonders bevorzugt, die zu einander ausgerichteten und durch Unterdruck in der Vakuumform fixierten Dekorschichten 2a, 2b zu schwenken, insbesondere um 180° und in das Kaschierwerkzeug einzubringen.

Weiterhin ist es im Sinne der vorliegenden Erfindung bevorzugt, dass man zwischen dem dritten und vierten Verfahrensschritt den Unterdruck der obengenannten Vakuumform entfernt und die ausgerichteten Dekorschichten 2a, 2b mit Unterdruck auf den Sichtseiten 3a, 3b in dem Kaschierwerkzeug fixiert.

## Patentansprüche

1. Verfahren zur Herstellung von Innenausstattungskomponenten von Kraftfahrzeugen aus einem Bauteilträger (1) und wenigstens zwei flächig damit verbundene Dekorschichten (2a, 2b) mit jeweils definiertem Oberflächen- und/oder Farbprofil der Dekorschichten (2a, 2b), die durch einen Nutgraben getrennt sind, **dadurch gekennzeichnet, dass** man
in einem ersten Schritt die jeweiligen Sichtseiten (3a, 3b) der jeweiligen Dekorschichten (2a, 2b) auf die jeweiligen gewünschten Narbtemperaturen im Bereich von 180 °C bis 220 °C bringt , die Rückseiten der Dekorschichten (2a, 2b) auf die jeweiligen Verformtemperaturen im Bereich von 130 bis 170 °C erwärmt, und in jeweils einem genarbten Formpresswerkzeug die jeweilige Formteilgeometrie und gleichzeitig die entsprechende Oberflächen-Narbung der Dekorschichten (2a, 2b) durch Pressen und/oder Tiefziehen herstellt,
in einem zweiten Schritt die Kanten der jeweiligen Dekorschichten (2a, 2b), soweit notwendig, beschneidet,
in einem dritten Schritt die jeweiligen Dekorschichten (2a, 2b) nebeneinander ausgerichtet positioniert unter Bildung eines Nutgrabens und durch Unterdruck **in einer Positiv-Aufnahme** fixiert und
in einem vierten Schritt die ausgerichteten Dekorschichten (2a, 2b) **mit der Positiv-Aufnahme** in ein Kaschierwerkzeug überführt und auf der den Sichtseiten (3a, 3b) gegenüberliegenden Fläche mit dem Bauteilträger (1) in an sich bekannter Weise kaschiert.

2. Verfahren nach Anspruch 1, **dadurch gekennzeichnet, dass** man Dekorschichten (2a, 2b) mit einer Gesamtfläche einsetzt, die die Trägerkante des Bauteilträgers (1) überragen und in einen weiteren Verfahrensschritt um die Trägerkante faltet.

3. Verfahren nach Anspruch 1, **dadurch gekennzeichnet, dass** man Dekorschichten (2a, 2b) mit einer Gesamtfläche einsetzt, die die Trägerkante des Bauteilträgers (1) überragen und diese während des Kaschiervorgangs um die Trägerkante des Bauteilträgers faltet.

4. Verfahren nach Anspruch 1, **dadurch gekennzeichnet, dass** man im dritten Schritt die jeweiligen Dekorschichten (2a, 2b) in einer Positiv-Vakuumform zueinander ausrichtet.

5. Verfahren nach Anspruch 1, **dadurch gekennzeichnet, dass** man im vierten Schritt die zueinander ausgerichteten und durch Unterdruck in der Vakuumform fixierten Dekorschichten (2a, 2b) schwenkt und in das Kaschierwerkzeug einbringt.

6. Verfahren nach Anspruch 5, **dadurch gekennzeichnet, dass** man den Unterdruck der Vakuumform entfernt und mit einem Unterdruck auf den jeweiligen Sichtseiten (3a, 3b) der jeweiligen Dekorschichten (2a, 2b) diese in dem Kaschierwerkzeug fixiert.

## Claims

1. A process for the preparation of interior trim components of motor vehicles from a component support (1) and at least two decorative layers (2a, 2b) two-dimensionally bonded thereto and having a respectively defined surface and/or color profile of the decorative layers (2a, 2b) separated by a groove, **characterized in that**
in a first step, the respective visible sides (3a, 3b) of the respective decorative layers (2a, 2b) are heated to the respectively desired graining temperatures in the range of from 180 to 220 °C, the back sides of the decorative layers (2a, 2b) are heated to the respective molding temperatures in the range of from 130 to 170 °C, and in a respectively grained mold, the respective molded part geometry and simultaneously the corresponding surface graining of decorative layers (2a, 2b) are prepared by pressing and/or deep drawing;
in a second step, the edges of the respective decorative layers (2a, 2b) are trimmed as necessary;
in a third step, the respective decorative layers (2a, 2b) are positioned in juxtaposed orientation and locked by reduced pressure in a positive fixture to form a groove; and
in a fourth step, the oriented decorative layers (2a, 2b) with the positive fixture are transferred to a backing mold and backed in a per se known manner with the component support (1) on the surface opposite to the visible sides (3a, 3b).

2. The process according to claim 1, **characterized in that** decorative layers (2a, 2b) are employed having a total surface that protrudes over the support edge of the component support (1) and is folded over the support edge in a further process step.

3. The process according to claim 1, **characterized in that** decorative layers (2a, 2b) are employed having a total surface that protrudes over the support edge of the component support (1) and is folded over the support edge of the component support during the backing process.

4. The process according to claim 1, **characterized in that** the respective decorative layers (2a, 2b) are mutually oriented in a positive vacuum mold in the third step.

5. The process according to claim 1, **characterized in that** the mutually oriented decorative layers (2a, 2b) locked in the vacuum mold by reduced pressure are swiveled and introduced in the backing mold in the fourth step.

6. The process according to claim 5, **characterized in that** the reduced pressure is removed from the vacuum mold, and the respective decorative layers (2a, 2b) are directly locked in the backing mold by applying reduced pressure to the respective visible sides (3a, 3b).

## Revendications

1. Procédé de fabrication de composants d'installation intérieure de véhicules moteurs, lesdits composants consistant en un support d'élément constructif (1) et au moins deux couches de décoration (2a, 2b) laminées dessus et séparées par une rainure, chacune des couches de décoration (2a, 2b) ayant un profil de surface et/ou de couleur défini, **caractérisé en ce que** dans une première étape, on amène les côtés visibles respectifs (3a, 3b) des couches de décoration respectives (2a, 2b) aux températures de grainage respectivement désirées dans la gamme de 180°C à 220°C, les côtés arrières des couches de décoration (2a, 2b) sont chauffés aux températures de moulage respectives dans la gamme de 130°C à 170°C, et la géométrie des pièces de moulage respective et en même temps le grainage de surface correspondante des couches de décoration (2a, 2b) sont produites dans un moule grainé respectif par pressage et/ou emboutissage;
dans une deuxième étape, les bords des couches de décoration respectives (2a, 2b) sont égalisés si nécessaire;
dans une troisième étape, les couches de décoration respectives (2a, 2b) sont positionnées et orientées l'une à côté de l'autre pour former une rainure et fixées dans une attache positive sous vide; et
dans une quatrième étape, les couches de décoration positionnées (2a, 2b) sont transférées avec l'attache positive dans un moule de laminage et laminées avec la surface opposée aux côtés visibles (3a, 3b) sur le support d'élément constructif (1) d'une manière connue en soi.

2. Procédé selon la revendication 1, **caractérisé en ce que** l'on utilise des couches de décoration (2a, 2b) ayant une surface totale allant au-delà du bord de support du support d'élément constructif (1), et que dans une autre étape du procédé, on les replie autour du bord de support.

3. Procédé selon la revendication 1, **caractérisé en ce que** l'on utilise des couches de décoration (2a, 2b) ayant une surface totale allant au-delà du bord de support du support d'élément constructif (1), et qu'on les replie autour du bord de support du support d'élément constructif pendant le processus de laminage.

4. Procédé selon la revendication 1, **caractérisé en ce que** l'on positionne les couches de décoration respectives (2a, 2b) dans une orientation mutuelle dans un moule à vide positif dans la troisième étape.

5. Procédé selon la revendication 1, **caractérisé en ce que**, dans la quatrième étape, l'on déplace par pivotement les couches de décoration (2a, 2b) positionnées dans une orientation mutuelle et fixées sous vide dans le moule à vide, et les introduit dans le moule de laminage.

6. Procédé selon la revendication 5, **caractérisé en ce que** l'on enlève le vide dans le moule à vide, et que l'on fixe les couches de décoration respectives (2a, 2b) sur les côtés visibles respectifs (3a, 3b) dans le moule de laminage sous vide.
